# EUROPEAN PATENT APPLICATION

(11) **EP 4 349 467 A1**
(43) Date of publication of application: **10.04.2024**
(21) Application number: 22815840.8
(22) Date of filing: 17.05.2022
(51) Int. Cl.: B01D 63/02, B01D 53/22, B01D 53/26, F24F 3/14

(54) **HOLLOW FIBER MEMBRANE MODULE AND DEHUMIDIFICATION AND HUMIDIFICATION DEVICE**

(30) Priority: 02.06.2021 JP 2021092864
(71) Applicant: NOK Corporation, Minato-ku, Tokyo 105-8585 (JP)
(72) Inventor: ITO, Yosuke, Kikugawa-shi, Shizuoka 437-1507 (JP)
(74) Representative: TBK
(86) International application number: PCT/JP2022/020504
(87) International publication number: WO 2022/255088

(57) **Abstract**

Provided are a hollow fiber membrane module and a dehumidification/humidification device which allow an improved contribution ratio of hollow fiber membranes to a membrane separation function and improved dehumidification/humidification performance to be achieved. An outer case 100 is provided with a double tube portion 120 forming an annular space K radially externally of an annular gap S on one end side, with a communication portion 121 providing communication between the annular gap S and the one end side of the annular space K, and with an outlet portion 122 providing communication between the annular space K and the outside of the outer case 100, while an inner case 200 is provided with a hollow region which is open on the other end side and with a plurality of windows 221 providing communication between the hollow region and the annular gap S.

## Description

### [Technical Field]

The present invention relates to a hollow fiber membrane module and a dehumidification/humidification device.

### [Background Art]

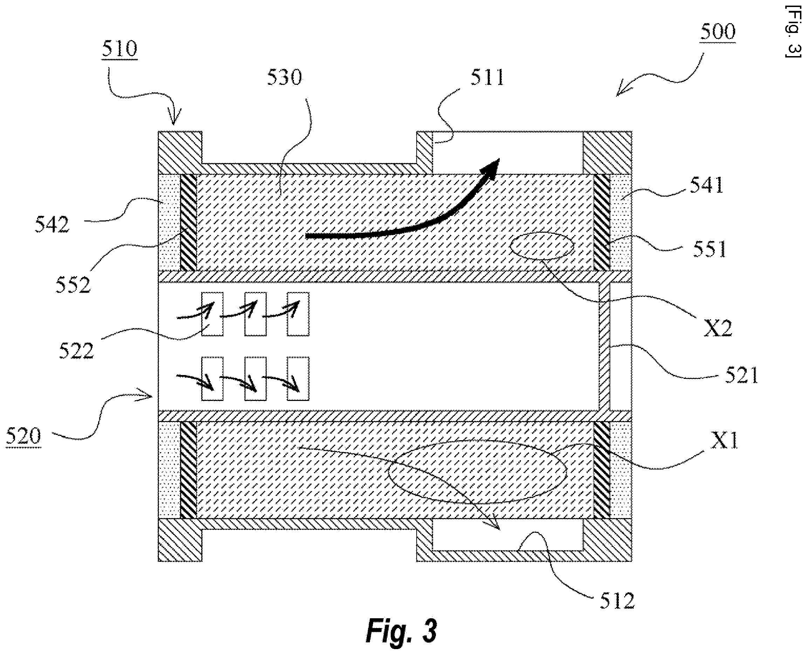

A hollow fiber membrane module included in a humidification device for a fuel battery is required to have improved humidification performance, a reduced pressure loss, a smaller size, and the like. To achieve these, it is necessary to increase a contribution ratio of hollow faber membranes included in a case to a membrane separation function. Accordingly, a technique of using a double case as the case of the hollow fiber membrane module to meet these requirements is known. Referring to Fig. 3, a description will be given of such a hollow fiber membrane module according to a conventional example. Fig. 3 is a schematic cross-sectional view of the hollow fiber membrane module according to the conventional example.

A hollow fiber membrane module 500 illustrated in the figure includes a cylindrical outer case 510, an inner case 520 placed inside the outer case 510, and a plurality of hollow fiber membranes 530 provided in an annular gap between the outer case 510 and the inner case 520. The hollow fiber membrane module 500 also includes a pair of sealing/fixing portions 541 and 542 and a pair of buffer portions 551 and 552. The sealing/fixing portions 541 and 542 have functions of sealing the annular gap mentioned above on one end side and another end side of each of the outer case 510 and the inner case 520 in a state where an inner hollow portion of each of the hollow fiber membranes 530 is open and fixing the plurality of hollow fiber membranes 530 to each of the outer case 510 and the inner case 520.

In at least one place of the outer case 510 in a circumferential direction, an outlet portion 511 is provided at a position offset on the one end side to provide communication between the annular gap mentioned above and the outside of the outer case 510. Note that, in a segment not provided with the outlet portion 511, a part 512 of an inner circumferential surface of the outer case 510 has an inner diameter larger than that of another segment so as to be kept from contact with an outer circumferential surface of a bundle of the plurality of hollow fiber membranes 530.

Meanwhile, inside the inner case 520, a partition wall 521 is provided and, on the other end side of the partition wall 521, a plurality of windows 522 are provided to provide communication between an inner hollow region of the inner case 520 and the annular gap mentioned above.

For the hollow fiber membrane module 500 thus configured, a wet gas is supplied to the inner hollow region of the inner case 520, while a dry gas is supplied from a sealing/fixing portion 541 side to the inner hollow portion of each of the hollow fiber membranes 530. As a result, as indicated by solid line arrows in the figure, the wet gas enters the annular gap mentioned above from the plurality of windows 522, passes through the outside of each of the hollow fiber membranes 530, and flows to the outside of the outer case 510 from the outlet portion 511 through the outside of the hollow fiber membrane 530. Meanwhile, the dry gas flows from the sealing/fixing portion 541 on the one end side toward the sealing/fixing portion 542 on the other end side through the inside of each of the hollow fiber membranes 530. As a result, due to the membrane separation function of the hollow fiber membranes 530, moisture in the wet gas moves toward the dry gas to humidify the dry gas.

In a case of a typical hollow fiber membrane module, a configuration is provided such that, in a single cylindrical case, a plurality of hollow fiber membranes are provided, and the case is provided with an inlet and an outlet for a wet gas, and consequently the hollow fiber membranes placed in the vicinity of a center of the case is less likely to greatly contribute to the membrane separation function. Meanwhile, in a case of the hollow fiber membrane module 500 according to the conventional example illustrated in Fig. 3 mentioned above, it is possible to allow the plurality of hollow fiber membranes 530 as a whole to contribute to the membrane separation function, and therefore it is possible to meet the requirements described above.

However, even in the case of the hollow fiber membrane module 500 described above, a flow of the wet gas passing through a portion at a shortest distance from one of the windows 522 toward the outlet portion 511 tends to be a main flow. Accordingly, it has been found that, in a region (in the vicinity of X1 in the figure) away from the outlet portion 511 and in a radially inner region (in the vicinity of X2 in the figure) on the one end side, it is difficult for the plurality of hollow fiber membranes 530 to contribute to the membrane separation function. Thus, there is still room for improvement.

### [Citation List]

### [Patent Literature]

[PTL 1] Japanese Patent Application Publication No. 2002-147802
[PTL 2] Japanese Patent Application Publication No. 2005-265196

### [Summary of Invention]

### [Technical Problem]

An object of the present invention is to provide a hollow fiber membrane module and a dehumidification/humidification device which allow an improved contribution ratio of hollow fiber membranes to a membrane separation function and improved dehumidification/humidification performance to be achieved.

### [Solution to Problem]

To solve the problem described above, the present invention has adopted the following means.

That is, a hollow fiber membrane module of the present invention includes: a cylindrical outer case; an inner case placed inside the outer case; a plurality of hollow fiber membranes provided in an annular gap between the outer case and the inner case; and a pair of sealing/fixing portions that seal the annular gap on one end side and another end side of each of the outer case and the inner case in a state where an inner hollow portion of each of the hollow fiber membranes is open and fix the plurality of hollow fiber membranes to each of the outer case and the inner case, the outer case being provided with a double tube portion forming an annular space radially externally of the annular gap on the one end side, with a communication portion providing communication between the annular gap and the one end side of the annular space, and with an outlet portion providing communication between the annular space and the outside of the outer case, the inner case being provided with a hollow region which is open on the other end side and with a plurality of windows providing communication between the hollow region and the annular gap.

According to the present invention, a fluid flowing from the hollow region of the inner case to the annular gap through the windows flows from the communication portion toward the annular space, and then flows from the outlet portion to the outside of the outer case. This can reduce an amount of the fluid flowing directly from the windows toward the outlet portion. Therefore, it is possible to improve a contribution ratio of the hollow fiber membranes to a membrane separation function.

It is preferable that the communication portion is provided around an entire circumference.

This can further increase the contribution ratio of the hollow fiber membranes to the membrane separation function.

It is preferable that the outlet portion is provided in at least one place in a circumferential direction.

It is preferable that the inner case is provided with a widened portion having a width in a direction perpendicular to a direction from the one end side toward the other end side which increases from the one end side toward the other end side, and the widened portion is provided with the plurality of windows.

By adopting such a configuration, in the vicinity of where the windows are provided, it is possible to allow a fluid passing through the outside of each of the hollow fiber membranes and a fluid passing through the inner hollow portion of the hollow fiber membrane to more easily become countercurrents.

A dehumidification/humidification device of the present invention includes: the hollow fiber membrane module described above; a wet gas supply device that supplies a wet gas to the hollow region; and a dry gas supply device that supplies a dry gas having a humidity lower than that of the wet gas to each of the inner hollow portions of the plurality of hollow fiber membranes.

Note that the individual configurations described above can be adopted in combination as much as possible.

### [Advantageous Effects of Invention]

As described above, according to the present invention, it is possible to allow the improved contribution ratio of the hollow fiber membranes to the membrane separation function and the improved dehumidification/humidification performance to b achieved.

### [Brief Description of Drawings]

[Fig. 1]

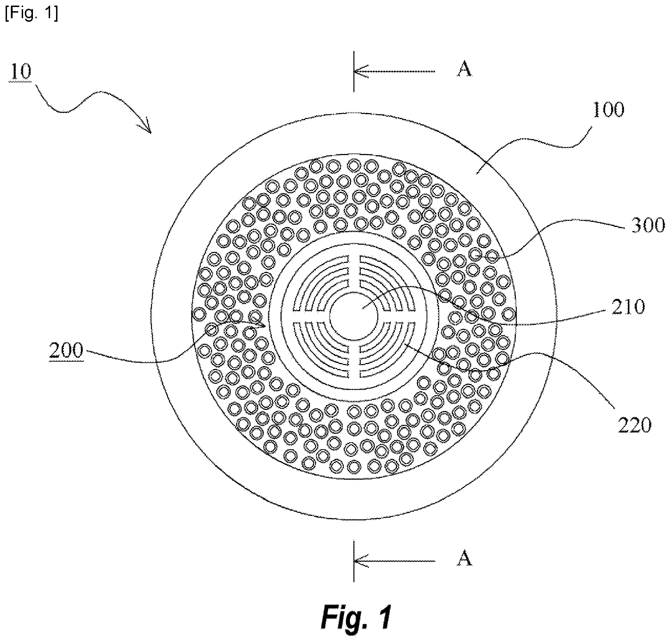

   Fig. 1 is a plan view of a hollow fiber membrane module according to an embodiment of the present invention.
[Fig. 2]

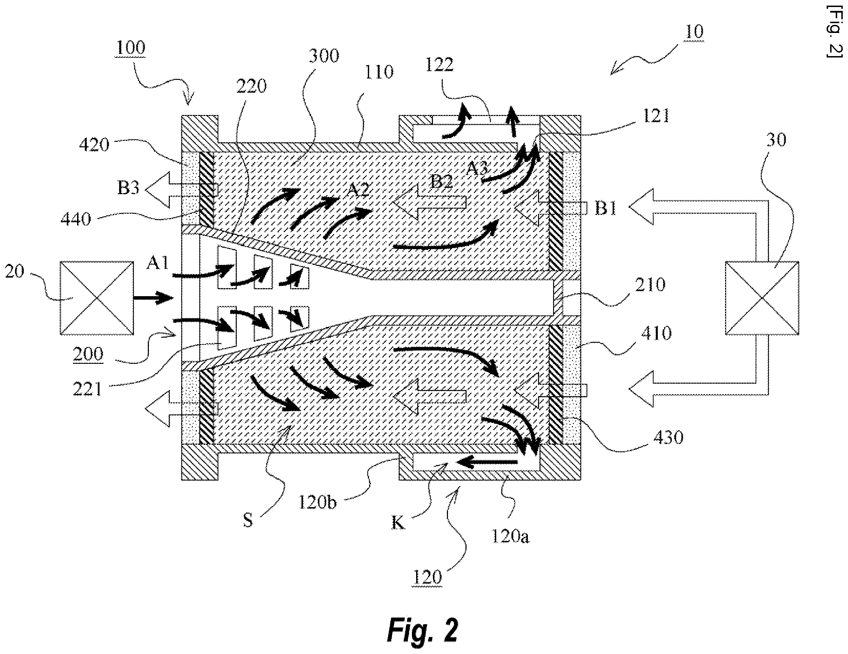

   Fig. 2 is a schematic configuration diagram of a dehumidification/humidification device according to the embodiment of the present invention.
[Fig. 3]
   Fig. 3 is a schematic cross-sectional view of a hollow fiber membrane module according to a conventional example.

### [Description of Embodiments]

Hereinafter, modes for implementing this invention will be exemplarily described in detail on the basis of an embodiment thereof with reference to the drawings. However, dimensions, materials, shapes, relative arrangements, and so forth of constituent parts described in this embodiment are not intended to limit the scope of this invention to these alone in particular unless specifically described.

### (Embodiment)

Referring to Figs. 1 and 2, a description will be given of a hollow fiber membrane module and a dehumidification/humidification device according the embodiment of the present invention. Fig. 1 is a plan view of the hollow fiber membrane module according to the embodiment of the present invention. Fig. 2 is a schematic configuration diagram of the dehumidification/humidification device according to the embodiment of the present invention. Note that, in Fig. 2, the hollow fiber membrane module is illustrated in the schematic cross-sectional view. The cross-sectional view of the hollow fiber membrane module corresponds to an AA cross-sectional view in Fig. 1.

### <Dehumidification/Humidification Device>

The dehumidification/humidification device according to the present embodiment includes a hollow fiber membrane module 10, a wet gas supply device 20, and a dry gas supply device 30. The wet gas supply device 20 is configured to supply a wet gas to the outside of each of hollow fiber membranes 300 included in the hollow fiber membrane module 10. Meanwhile, the dry gas supply device 30 is configured to supply a dry gas having a humidity lower than that of the wet gas mentioned above to each of inner hollow portions of the plurality of hollow fiber membranes 300. As a result, due to a membrane separation function of the hollow fiber membranes 300, moisture in the wet gas moves toward the dry gas. Accordingly, the dry gas is humidified, while the wet gas is dehumidified, and therefore the dehumidification/humidification device can be used as each of a humidification device and a dehumidification device. Note that the dehumidification/humidification device according to the present embodiment can be used appropriately as a humidification device for humidifying an electrolyte membrane included in a fuel battery. In this case, wet air generated in the fuel battery is used as the wet gas mentioned above. Then, the humidified gas (air) is supplied to the electrolyte membrane included in the fuel battery to allow the electrolyte membrane to maintain a wet state. As a material of the hollow fiber membranes 300, for example, PPSU (polyphenylsulfone) having a property of permeating moisture using a capillary condensation mechanism based on pore size control or the like can be used appropriately. Note that, when a membrane-forming solution (the material of the hollow fiber membranes) is adjusted, by performing fiber spinning using the membrane-forming solution obtained by adding, into a solvent, the PPSU and a hydrophilic polymer (polyvinylpyrrolidone), it is possible to obtain hydrophilic hollow fiber membranes. It is also possible to use Nafion (registered trademark) which is a hydrophilic material having a property of permeating moisture through dissolution and diffusion. Each of materials as described above has a low elution property as well as a high strength, and can accordingly be used appropriately for a dehumidification/humidification device.

### <Hollow Fiber Membrane Module>

A more detailed description will be given of the hollow fiber membrane module 10 according to the present embodiment. The hollow fiber membrane module 10 includes a cylindrical outer case 100, an inner case 200 placed inside the outer case 100, and the plurality of hollow fiber membranes 300 provided in an annular gap S between the outer case 100 and the inner case 200. In addition, the hollow fiber membrane module 10 includes a pair of sealing/fixing portions 410 and 420 and a pair of buffer portions 430 and 440. The pair of sealing/fixing portions 410 and 420 have functions of sealing the annular gap S mentioned above on one end side (right side in Fig. 2) and another end side (left side in Fig. 2) of each of the outer case 100 and the inner case 200 in a state where the inner hollow portion of each of the hollow fiber membranes 300 is open and fixing the plurality of hollow fiber membranes 300 to each of the outer case 100 and the inner case 200. The sealing/fixing portions 410 and 420 can be obtained through curing of a potting material such as an epoxy resin. Meanwhile, the pair of buffer portions 430 and 440 are formed of a highly flexible material such as silicon. By providing the buffer portions 430 and 440, it is possible to inhibit the hollow fiber membranes 300 from swinging in the vicinities of the sealing/fixing portions 410 and 420 and being damaged in the vicinity of an interface with each of the sealing/fixing portions 410 and 420. Note that, for the sake of convenience, in the hollow fiber membrane module 10, the right side in Fig. 2 is hereinafter referred to as the "one end side", while the left side therein is hereinafter referred to as the "other end side".

The outer case 100 includes a cylindrical case main body portion 110. In the present embodiment, the case main body portion 110 is formed of a substantially cylindrical portion, but a shape thereof is not limited thereto, and various shapes such as, e.g., a prismatic shape can be adopted. The outer case 100 is provided with a double tube portion 120 forming an annular space K radially externally of the annular gap S on the one end side. The double tube portion 120 according to the present embodiment is configured to include a cylindrical portion 120a having an outer diameter and an inner diameter which are larger than an outer diameter and an inner diameter of the case main body portion 110 and a connection portion 120b connecting the other end side of the cylindrical portion 120a and the case main body portion 110. The outer case 100 is further provided with a communication portion 121 providing communication between the annular gap S and the one end side of the annular space K and with an outlet portion 122 providing communication between the annular space K and the outside of the outer case 100. The communication portion 121 according to the present embodiment is provided around an entire circumference. Note that, in terms of increasing a contribution ratio of the hollow fiber membranes 300 to the membrane separation function, the communication portion 121 is preferably provided around the entire circumference, but need not necessarily be provided around the entire circumference, and a configuration in which a plurality of the communication portions 121 are provided to be spaced apart in a circumferential direction can also be adopted. The outlet portion 122 is provided in at least one place in the circumferential direction, and the number of the outlet portions 122 can be set appropriately according to dimensions of the hollow fiber membrane module 10 and a use environment thereof.

The inner case 200 is configured such that a partition wall 210 is provided inside a cylindrical member. As a result, the inner case 200 is configured to be provided with a hollow region which is open on the other end side. Additionally, the inner case 200 is provided with a widened portion 220 having a width in a direction perpendicular to a direction from the one end side toward the other end side which increases from the one end side toward the other end side. The widened portion 220 according to the present embodiment has an inner circumferential surface and an outer circumferential surface each formed of a tapered surface. However, a shape of each of the inner circumferential surface and outer circumferential surface of the widened portion 220 is not limited to the tapered surface, and another shape can also be adopted as long as the widened portion 220 is configured to have a gradually increasing width in the direction perpendicular to the direction from the one end side toward the other end side. For example, a warped surface having a curved cross-sectional shape resulting from cutting along a plane including a center axial line, a shape presenting a pyramidal surface, or the like can also be adopted.

Additionally, in the inner case 200, the widened portion 220 is provided with a plurality of windows 221 providing communication between the hollow portion and the annular gap S. Note that the inner case 200 is configured to have a constant inner diameter and a constant outer diameter on the one end side of the widened portion 220. In other words, the inner case 200 on the one end side of the widened portion 220 is formed of a cylindrical portion.

To the hollow fiber membrane module 10 thus configured, the wet gas is supplied by the wet gas supply device 20 to the hollow region of the inner case 200. Meanwhile, by the dry gas supply device 30, the dry gas is supplied from the one-end-side sealing/fixing portion 410 to each of the inner hollow portions of the plurality of hollow fiber membranes 300. A more detailed description will be given of this point.

The wet gas is supplied from the wet gas supply device 20 to the hollow region (an arrow A1 in Fig. 2) to enter the annular gap S from the plurality of windows 221 (an arrow A2). The wet gas that has entered the annular gap S passes through the outside of each of the hollow fiber membranes 300, flows from the communication portion 121 to the annular space K (an arrow A3), and then flows from the outlet portion 122 to the outside of the outer case 100. Meanwhile, the dry gas is supplied by the dry gas supply device 30 from the sealing/fixing portion 410 on the one end side to each of the inner hollow portions of the plurality of hollow fiber membranes 300 (an arrow B1), and flows inside each of the hollow fiber membranes 300 (an arrow B2). Then, the dry gas is discharged from the other-end-side sealing/fixing portion 420 on the other end side (an arrow B3). In the foregoing process, due to the membrane separation function of the hollow fiber membranes 300, moisture in the wet gas moves toward the dry gas to humidify the dry gas, while the wet gas is dehumidified.

### <Advantages of Hollow Fiber Membrane Module and

### Dehumidification/Humidification Device According to Present Embodiment>

According to the present embodiment, a configuration is provided such that the wet gas flows from the plurality of windows 221 provided in the inner case 200 to the outlet portion 122 provided in the outer case 100. As a result, it is possible to allow the plurality of hollow fiber membranes 300 as a whole provided in the annular gap S between the inner case 200 and the outer case 100 to contribute to the membrane separation function. In addition, in the present embodiment, a fluid flowing from the hollow region of the inner case 200 to the annular gap S through the windows 221 flows from the communication portion 121 toward the annular space K, and then flows from the outlet portion 122 to the outside of the outer case 100. This can reduce an amount of the fluid flowing directly from the windows 221 toward the outlet portion 122. Therefore, it is possible to improve the contribution ratio of the hollow fiber membranes 300 to the membrane separation function.

Additionally, in the present embodiment, the communication portion 121 is provided around the entire circumference. This can further increase the contribution ratio of the hollow fiber membranes 300 to the membrane separation function.

Furthermore, the inner case 200 according to the present embodiment is provided with the widened portion 220 having the width in the direction perpendicular to the direction from the one end side toward the other end side which increases from the one end side toward the other end side, and the widened portion 220 is provided with the plurality of windows 221. Accordingly, in the vicinity of where the windows 221 are provided, it is possible to allow a fluid passing through the outside of each of the hollow fiber membranes 300 and a fluid passing through the inner hollow portion of the hollow fiber membrane 300 to more easily become countercurrents. This can increase the membrane separation function and increase dehumidification/humidification performance.

### (Others)

In the embodiment described above, the configuration has been described in the case where the inner case 200 is provided with the widened portion 220, and the widened portion 220 is provided with the plurality of windows 221. However, the present invention also includes a configuration in a case where an inner case is not provided with a widened portion, and a portion having a constant width is provided with a plurality of windows. For example, the invention of the application is also applicable to an inner case 520 having a plurality of windows 522 as illustrated in Fig. 3 described in the prior art.

### [Reference Signs List]

- 10: Hollow fiber membrane module
- 20: Wet gas supply device
- 30: Dry gas supply device
- 100: Outer case
- 110: Case main body portion
- 120: Double tube portion
- 120a: Cylindrical portion
- 120b: Connection portion
- 121: Communication portion
- 122: Outlet portion
- 200: Inner case
- 210: Partition wall
- 220: Widened portion
- 221: Window
- 300: Hollow fiber membrane
- 410, 420: Sealing/fixing portion
- 430, 440: Buffer portion
- K: Annular space
- S: Annular gap

## Claims

1. A hollow fiber membrane module comprising:
a cylindrical outer case;
an inner case placed inside the outer case;
a plurality of hollow fiber membranes provided in an annular gap between the outer case and the inner case; and
a pair of sealing/fixing portions that seal the annular gap on one end side and other end side of each of the outer case and the inner case in a state where an inner hollow portion of each of the hollow fiber membranes is open and fix the plurality of hollow fiber membranes to each of the outer case and the inner case,
the outer case being provided with a double tube portion forming an annular space radially externally of the annular gap on the one end side, with a communication portion providing communication between the annular gap and the one end side of the annular space, and with an outlet portion providing communication between the annular space and the outside of the outer case,
the inner case being provided with a hollow region which is open on the other end side and with a plurality of windows providing communication between the hollow region and the annular gap.

2. The hollow fiber membrane module according to claim 1,
wherein the communication portion is provided around an entire circumference.

3. The hollow fiber membrane module according to claim 1 or 2,
wherein the outlet portion is provided in at least one place in a circumferential direction.

4. The hollow fiber membrane module according to claim 1, 2, or 3,
wherein the inner case is provided with a widened portion having a width in a direction perpendicular to a direction from the one end side toward the other end side which increases from the one end side toward the other end side, and the widened portion is provided with the plurality of windows.

5. A dehumidification/humidification device comprising:
the hollow fiber membrane module according to any one of claims 1 to 4;
a wet gas supply device that supplies a wet gas to the hollow region; and
a dry gas supply device that supplies a dry gas having a humidity lower than that of the wet gas to each of the inner hollow portions of the plurality of hollow fiber membranes from the sealing/fixing portion of the one end side.
